# EUROPEAN PATENT APPLICATION

(11) **EP 3 756 473 A1**
(43) Date of publication of application: **30.12.2020**
(21) Application number: 20182129.5
(22) Date of filing: 25.06.2020
(51) Int. Cl.: A23L 5/30, A01K 61/10, A01K 61/13, A01K 61/80, B06B 1/02

(54) **SYSTEM AND PROCESS OF MODULATING NUTRITIONAL SUPPLEMENTATION IN FISH FOR IMPROVING GROWTH RATE BY USING LOW-FREQUENCY ULTRASOUNDS**

(30) Priority: 25.06.2019 PT 2019115597
(71) Applicant: Centro De Ciências Do Mar Do Algarve, 8005-139 Faro (PT)
(72) Inventor: ENGROLA, Sofia, 8005-233 FARO (PT); GUILLÉN, Carmen, 8005-160 FARO (PT); DIAS, Jorge, 8150-023 SÃO BRÁS DE ALPORTEL (PT)
(74) Representative: Gata-Goncalves, Ligia

(57) **Abstract**

The present invention relates to a system and to process of improving growth performance in fish by promoting gut maturation through the incorporation of bioactive compounds into fish eggs assisted by low-frequency ultrasounds.

The system of the present invention comprises a signal generator (1), a signal amplifier (2) and an ultrasound transducer (3) that is immersed in the sample with fish-eggs (5). Signal programming can be performed directly on the equipment or through a remote (USB or Ethernet) portable computer (4).

The process of the invention comprises providing *in ovo* stimulus with an adequate bioactive compound relevant for gut maturation assisted by sonophoresis.

By using early nutritional supplementation through sonophoresis in fish nutrition increase fish production efficiency and consequently decrease environmental impact.

The present invention relates to the field of biological sciences, fish nutrition, aquaculture, and electronics.

## Description

### TECHNICAL FIELD OF THE INVENTION

The present invention relates to a system and to process of improving growth performance in fish by promoting gut maturation through the incorporation of bioactive compounds into fish eggs assisted by low-frequency ultrasounds.

The system of the present invention comprises a signal generator, a signal amplifier, and an ultrasound immersion transducer. Signal programming can be performed directly on the equipment or through a remote (USB or Ethernet) portable computer.

The process of the invention comprises providing *in ovo* stimulus with an adequate bioactive compound relevant for gut maturation assisted by sonophoresis.

An early *in ovo* stimulus with an adequate bioactive compound involved in gut maturation improves intestinal maturation and digestive efficiency in fish in the short and long-term, leading to a higher fish performance.

By using early nutritional programming through sonophoresis in fish nutrition according to the process of the invention, intestinal maturation and digestive efficiency are improved in the short and long-term, leading to a higher fish performance, increasing fish production efficiency and consequently decrease environmental impact.

The present invention relates to the field of biological sciences, fish nutrition, and more particularly to the fish aquaculture production field.

### BACKGROUND OF THE INVENTION

The aquaculture sector is currently one of the pillars to secure animal protein for the growing Human population. For that, it is crucial to improve the efficiency of the current production methods.

The consequences and implications of early nutrition for aquaculture production is an important challenge for the future. Understanding the mechanisms that control early development and growth and their relationship with nutrition are critical for the identification of early dietary interventions to promote fish production efficiency.

Nutritional programming is the use of a nutritional stimulus or various stimuli in early development stage that affect permanently the individuals. Nutritional stimulus can be applied to animals in different stages of development, such as to the embryo and beyond birth, during the early phases of life.

Until the present date, to modulate the nutritional reserves of a fish egg, it is necessary to appeal to other techniques like microinjection. This technique can be applied to gilthead seabream eggs; however, it is not feasible to be applied to large scale industries like hatcheries and in egg and larvae of fish since it causes low survival after procedure.

One other known technique is electroporation consisting of applying high voltage electric field to fish eggs for inducing a transient state of permeability of the cell membrane. Despite presenting high survival rates (close to 95%) when lower voltage is used, similarly to microinjection it cannot be applied to large scale industries like hatcheries due to technical constrains of the technique.

Sonophoresis is defined as the use of ultrasonic energy to enhance the topical or transdermal delivery of drugs or compounds.

Ultrasound is an acoustic vibration characterized by longitudinal compression waves that propagate at frequencies beyond the human auditory threshold. Thus, ultrasound transmission induces compression and expansion of the medium through which it is passing, leading to associated pressure variations. Ultrasound is normally generated by a transducer that converts electricity to sound.

For continuous wave ultrasound production, an alternating voltage is applied to the transducer, resulting in the continuous emission of ultrasound of the same frequency. To generate pulsed ultrasound, short bursts of alternating voltage are repeatedly applied to the transducer. Under the intensities and conditions used in sonophoresis, generated ultrasound tends to retain its frequency and waveform regardless of the medium that the beam is passing through. Ultrasonic waves can interact with biological tissues in a variety of ways, classified into cavitation effects (acoustically induced bubble phenomena), heating (the absorption of the ultrasonic waves energy increases the temperature of the exposed medium) and microstreaming (acoustically triggered unidirectional current flow that is produced by ultrasonic reflections and other distortions occurring in liquid or semiliquid media during wave propagation).

The first experiment focused on sonophoresis for enhancing drug delivery was carried out by Tachibana and Tachibana (1991), reporting that ultrasound at a very low frequency could enhance transcutaneous insulin penetration in hairless rats *in vivo.*

An array of subsequent studies confirmed that low-frequency (20-500 kHz) ultrasound was indeed highly efficacious in enhancing the transdermal absorption of a diverse range of penetrants.

During this process, adjacent bubbles merge to form larger bubbles that continue to enlarge, creating channels in the membrane. These channels grow with time to traverse the entire thickness of the membrane, leading essentially to the formation of new internal transport routes.

Based on this technology, transdermal drug delivery (TDD) is a non-invasive, topical administration method for therapeutic agents. TDD represents a considerable technological advance compared to oral delivery because gastrointestinal degradation and first-pass metabolism through the liver are avoided.

In mammals, numerous studies of sonophoresis have been shown to increase skin permeability to various drugs and therapeutic compounds, including hydrophilic and large molecular weight compounds, especially under low frequency sonophoresis.

Optimal sonication parameters are mainly dependent on the species-specific skin morphology and distance to the transducer.

Three possible modes through which inertial cavitation may enhance epithelial permeability: (a) spherical collapse near the epithelial surface emits shock waves, (b) impact of an acoustic micro-jet on the epithelial surface, and (c) micro-jets physically penetrating into the epithelium.

The application of sonophoresis in fish was mainly explored to enable the enhanced uptake of immersion vaccines. Studies performed with medium frequency ultrasound (1 MHz) and focal skin sonication revealed no structural changes in the fish dermis and epidermis at intensities of 0.5 W/cm2. Although, higher intensities (1 W/cm2 at 1 MHz) revealed intercellular space widening and outer cell layer necrosis.

Furthermore, it was reported good protection in challenged fish after low-frequency sonophoresis mediated immersion vaccination against viral haemorrhagic septicaemia (VHS) and Vibrio *sp.* at intensities of 0.4-0.6 W/cm2 (40 kHz) and 0.175 W/cm2 (35 kHz).

In early stages of development, Bart et al. (2001) enhanced diffusion of calcein into rainbow trout (*Oncorhynchus mykiss*) larvae using cavitation level ultrasound. This study tested two voltage amplitudes, two calcein concentrations and two duration of treatments. Results from these experiments demonstrated that a several-fold increase in the rate of diffusion of calcein into fish can be achieved when treated with cavitation level, low frequency ultrasound (40 kHz and 90 or 120 mV).

However, this technique was designed for being applied to fish larvae (specifically to 30 days post-hatching rainbow trout larvae). The ultrasound protocol with better calcein incorporation efficiency comprised a cycle of 15 minutes, which caused an increase in temperature of the solution. Applying this protocol to fish eggs will affect egg's viability, an alternative with shorter frequency pulses should be necessary.

So far, the state of the art is silent in what regard to the use of low frequency ultrasounds (0.1MHz and 0.08MHz, for freshwater and seawater species, respectively) for fish egg nutritional modulation.

Although large quantities of fish larvae are produced by aquaculture industry, survival rates are low or highly variable and growth potential is in most cases not fully exploited, indicating significant a huge gap in our knowledge concerning optimal nutritional conditions.

Early nutritional modulation with natural digestive promoters during early stages may be correlated with high performance phenotypes. The perspective of applying this novel concept to aquaculture industry provides numerous advantages, since digestive capacity is considered key to fish resilience, and therefore to growth and survival.

Therefore, there is a need of developing and implementing a process that enables to improve the growth rate in fish and at the same time is environmentally friendly and inexpensive.

For this purpose, the present invention also relates to an ultrasound system that provides the necessary range of values that enable to carry the process of nutritional programming herein disclosed.

The present invention provides a process and a system that achieve these goals by promoting the incorporation of bioactive compounds into fish eggs assisted by low-frequency ultrasounds (sonophoresis), which conduct to a higher digestive efficiency and, consequently growth improvement. These ultrasounds are provided by the system also herein proposed.

### DESCRIPTION OF THE FIGURES

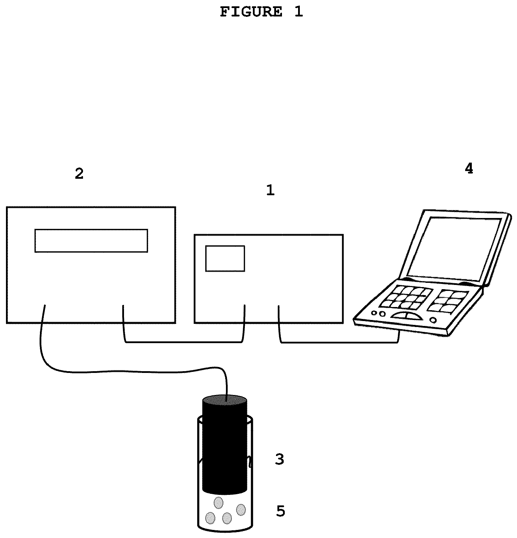

**Fig.1** - Modular scheme of the components of the ultrasound system according to the present invention, wherein:
   1 represents a signal generator,
   2 represents a signal amplifier,
   3 represents an ultrasound immersion transducer.
   4 represents a processing unit, preferably a portable computer for performing signal programming directly on the equipment or through a remote (USB or Ethernet),
   5 represents the sample to be treated with ultrasounds.
   In this particular embodiment of the ultrasound system, the output of the amplifier (2) is connected to the submerged ultrasound transducer (3), which has a diameter of 2.5cm and is designed for a centre frequency of 70Hz a 120Hz, wherein the "central or centre frequency" is the frequency noted on a transducer and depends primarily on the backing material.

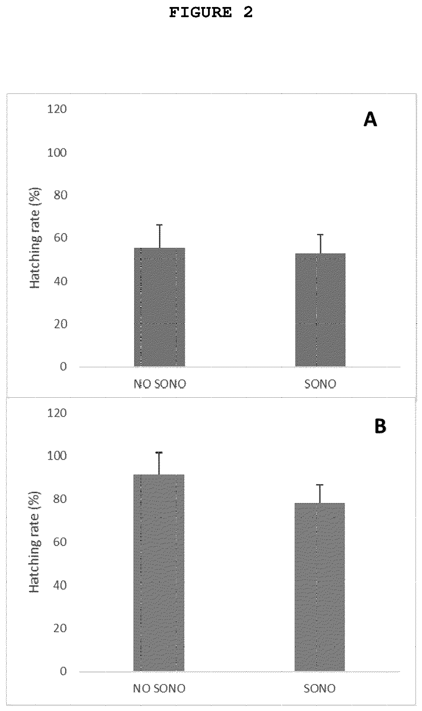

**Fig.2** - Graphics showing zebrafish (A) and gilthead seabream (B) hatching rate. The presented values refer to means (±SD). Absence of letters indicate no statistical differences (p>0.05) between the different treatments.
   Further:
   NO SONO - means eggs without sonophoresis treatment, and SONO - means eggs with sonophoresis treatment with the parameters described above in respect of each fish-species.
   From these figures, it is possible to observe that sonophoresis technique did not negatively affect larval hatching rate, no statistical differences were recorded between NO SONO and SONO groups neither for zebrafish nor gilthead seabream.

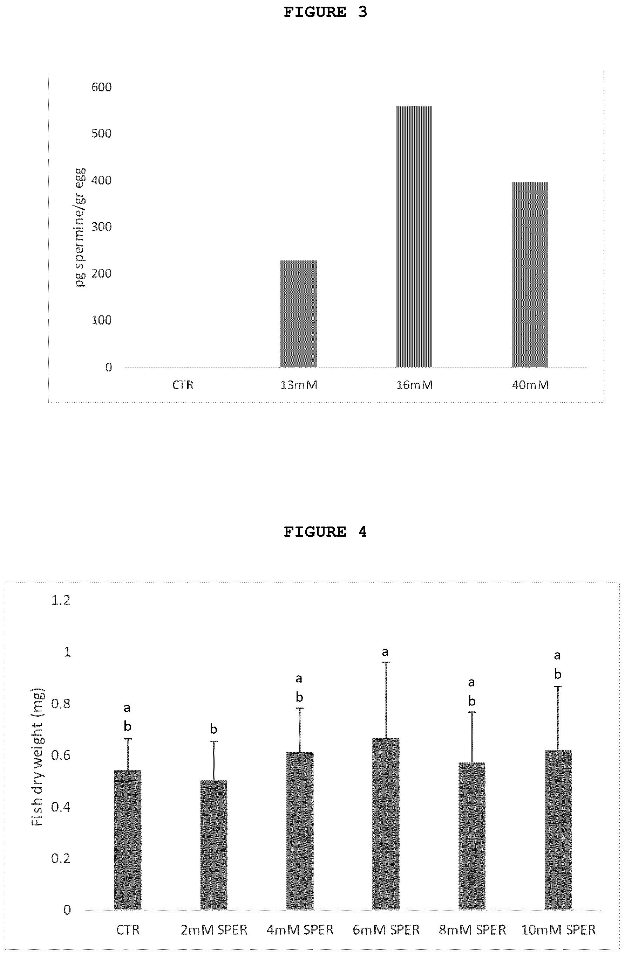

**Fig.3** - The graphic shows spermine content in zebrafish eggs supplemented with three different concentrations of spermine (13mM, 16mM and 40mM) and the control group without spermine supplementation (CTR). Herein, it is possible to observe that until 16mM, spermine content in the eggs tended to increase in relation to CTRL group, reaching the higher incorporation efficiency when treated with 16mM spermine solution. By contrast, 40mM solution seemed to be too concentrated, being the incorporation efficiency lower than that obtained at 16mM spermine, probably due to osmotic regulation.
**Fig.4** - This graphic shows the variation of zebrafish dry weight at the end of the rearing period, i.e. 25 days of egg post-fertilization (25dpf) in function of different levels of spermine supplementation to the eggs: 2mM, 4mM, 6mM, 8mM and 10mM, and the control group without spermine supplementation (CTR) .
   Values are means (±SD). Different letters indicate statistical differences (p<0.05, ANOVA) between larvae from different treatments at the same age.
   It is possible to observe that zebrafish dry weight at the end of the rearing period was statistically higher in eggs supplemented with 6mM spermine, indicating higher growth performance in these individuals.

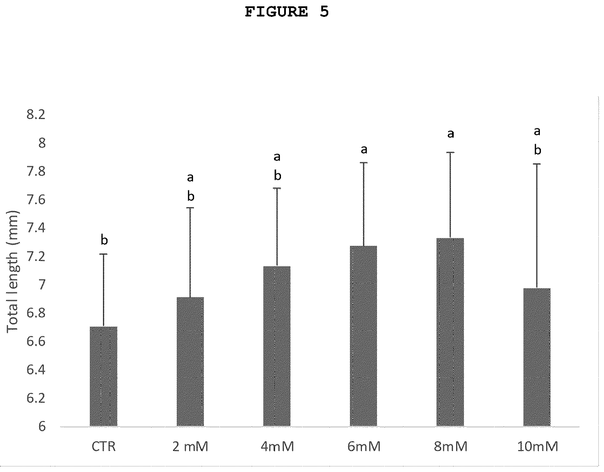

**Fig.5** - This graphic shows the variation of zebrafish total length at the end of the rearing period (25dpf) in function of different levels of spermine supplementation to the eggs (2mM, 4mM, 6mM, 8mM and 10mM) and the control group without spermine supplementation (CTR).
   Values are means (±SD). Different letters indicate statistical differences (p<0.05, ANOVA) between larvae from different treatments at the same age.
   From this graphic it is possible to observe that fish length statistically increased with spermine concentration when compared to the control group.

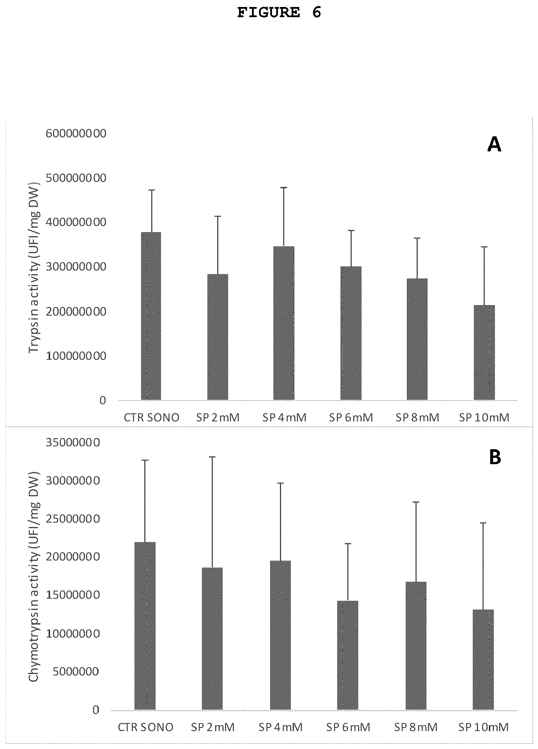

**Fig. 6**. This graphic shows the variation of Trypsin (A) and Chymotrypsin (B) activity in zebrafish at 25dpf in function of different levels of spermine supplementation to the eggs: 2mM, 4mM, 6mM, 8mM and 10mM, and the control group without spermine supplementation (CTR).
   Values are means (±SD). Absence of letters indicate no statistical differences (p>0.05) between larvae from different treatments at the same age.
   This graphic shows that protease enzyme activity either of trypsin and chymotrypsin did not show statistical differences between treatments, although it was observed a trend to decrease activity in both enzymes when spermine concentration increased probably due to a deleterious effect of the highest concentration on digestive efficiency.

### DESCRIPTION OF THE INVENTION

The present invention relates to a system and to process of improving growth performance in fish by promoting gut maturation through the incorporation of bioactive compounds into fish eggs assisted by low-frequency ultrasounds.

### 1. Ultrasound system

The specific ultrasound system herein proposed is designed to implement the process of the present invention and thus, it comprises the necessary components to generate low frequency ultrasounds, namely a signal generator (1), a signal amplifier (2) linked to an immersion ultrasound transducer (3) to transfer the signal to an aquatic media of a sample (5).

Sonophoresis parameters varies for eggs of different types of fish, namely from sea- and freshwater species mainly due to differences in the embryo membrane composition and morphology. In the scope of the present invention, it was observed that the optimal frequency applicable to eggs of freshwater fish (such as zebrafish) is approximately of 100,000Hz, whilst for seawater species, such as gilthead seabream (*Sparus aurata*)*,* the frequency is of approximately 80,000Hz.

The transducer of the invention must provide the necessary frequency to promote the creation of transmembrane channels in a short period of time to avoid water temperature increase. In result, the ultrasound system of the invention comprises an immersible ultrasound transducer designed for a centre frequency of 70000 Hz to 120000 Hz, preferably of 80000 Hz to 100000Hz.

### 2. Process for modulating nutritional supplementation in fish

The process of the present invention aims to modulate the incorporation of bioactive compounds into fish eggs for increasing fish growth by promoting early fish gut maturation. This is achieved by providing *in ovo* stimulus with an adequate bioactive compound relevant for gut maturation assisted by sonophoresis.

For this purpose, several assays were performed by applying different ranges of ultrasound intensity, frequency, and duration to eggs from different fresh- and seawater species.

### 2.1 Bioactive compounds

Suitable bioactive compounds, for the purpose of the present invention are amongst others amino acids such us arginine and glutamine, spermine, curcumin and allicin.

### 2.2 Fish eggs supplementation

The selected bioactive compound is first diluted in a suitable solution, such as Ringer's solution for seawater or freshwater teleost in the appropriate concentration as described by Young (1933) .

As there are no previous indications in the state of the art referring which is the suitable concentration for each species and bioactive compound, concentration of the compound to be incorporated must be tested and optimized previous to the implementation of the method of the inventio with the possibility of construction of a data library species-specific.

It was observed that teleost fish eggs are more sensitive to high concentrations of spermine than freshwater fish eggs. The optimal concentration to be used is determined based on the incorporation efficiency and eggs hatching rate.

Then, eggs are added to the solution comprising the bioactive compound at an adequate concentration relative to the amount of eggs, in a container at a level that ensures the complete immersion of the transducer. e.g. for spermine supplementation in zebrafish eggs, a concentration of 10 mM does not affect hatching rate, while concentrations above 20 mM seem to be toxic.

It is recommended the diameter of the container to have the same diameter to the immersion transducer to allow the waves generated by the ultrasounds to dissipate only in vertical in the water column.

The density of eggs in the container is chosen based on its diameter. It is important that the eggs form a single layer in the bottom (for freshwater fish) or in the top (for teleost fish) of the water column, to ensure that all the eggs are equally exposed to the ultrasound waves to increase incorporation efficiency. For gilthead seabream (*Sparus aurata*) a suitable concentration is of 1.25gr eggs/2.5cm diameter.

### 2.3 Application of ultrasounds

It was observed that good results are achieved when is applied two pulses each one with the duration of approx. 100 sec, with a frequency of approx. 100 000 Hz, and amplitude of approx. 100 mV to freshwater species, such as zebrafish (*Danio rerio*) supplemented with bioactive compounds such as spermine.

For seawater species, such as gilthead seabream (*Sparus* aurata), the ultrasounds are advantageously applied in two pulses each one with the duration of approx. 150 sec, with a frequency of approx. 80 000 Hz, and amplitude of approx. 150 mV.

After sonophoresis and before sampling for incorporation efficiency analysis, eggs prepared according to example 1 and 2 are placed in rearing water for an hour since this period is a suitable trade-off between the time necessary for the restoration of embryo membrane permeability while avoiding significant supplementation losses by osmotic regulation.

### EXAMPLES

### Example 1. Supplementing seawater fish-eggs

Gilthead seabream (*Sparus aurata*) eggs were supplemented with spermine.

A 1.5mM spermine solution was obtain by dissolving 0.3gr of spermine (S3256, Sigma-Aldrich) in 1 L of Ringer's solution for teleost fish.

Gilthead seabream eggs were obtained from a captive broodstock at Estação Piloto de Piscicultura (EPPO, IPMA, Olhão, Portugal.

Eggs with dissolved spermine were placed in a container and the volume of the solution was filed to a level enabling to completely cover the immersion transducer at a density of 5 eggs mL⁻¹.

Ultrasounds were applied by providing two pulses each one with the duration of 150 sec, with a frequency 80000 Hz, and amplitude of 150 mV.

### Example 2. Supplementing freshwater fish-eggs

Zebrafish (*Danio rerio*) eggs were supplemented with spermine. 13, 16 and 40 mM spermine solutions were obtained by dissolving 2.63, 3.23 and 8.09 gr of spermine (S3256, Sigma-Aldrich), respectively, in 1 L of Ringer solution for freshwater fish.

Eggs with dissolved spermine were placed in a container and the volume of the solution was filed to a level enabling to completely cover the immersion transducer at a density of 5 eggs mL⁻¹.

Ultrasounds were applied by providing two pulses each one with the duration of 100 sec, with a frequency of 100000 Hz, and amplitude between 100 mV.

### Example 3. Efficiency analysis

After sonophoresis and before sampling for incorporation efficiency analysis, eggs prepared according to example 1 and 2 are placed in rearing water for an hour.

Spermine incorporation efficiency was analysed through the measurement of spermine content in the eggs by gas chromatography-mass spectrometry (GC-MS) following the protocols described by Chen et al. (2009) and Sagratini *et al.* (2012) .

For zebrafish eggs supplemented with spermine at 13 mM, 16 mM and 40mM, after incorporation efficiency analysis, it was recorded that until 16mM, spermine content in the eggs tended to increase in relation to CTRL group, reaching the higher incorporation efficiency when treated with 16mM spermine solution. By contrast, 40mM solution seemed to be too concentrated, being the incorporation efficiency lower than that obtained at 16mM spermine, probably due to osmotic regulation.

### References

Bart, A.N., Kindschi, G.A., Ahmed, H., Clark, J., Young, J., Zohar, Y., 2001. Enhanced transport of calcein into rainbow trout, Oncorhynchus mykiss, larvae using cavitation level ultrasound. Aquaculture. 196, 189-197.

Lavon, I., Kost, J., 2004. Ultrasound and transdermal drug delivery. Drug Discov Today. 9, 670-676.
Lee, D.-H., Lim, S.-R., Han, J.-J., Lee, S.-W., Ra, C.-S., Park, D., Park, H., Seo, J., Lee, S., 2014. Sonophoresis in transdermal drug deliverys. Ultrasonics. 54, 56-65. Tachibana, K., Tachibana, S., 1991. Transdermal delivery of insulin by ultrasonic vibration. J Pharm Pharmacol. 43, 270-271.
Young, J.Z., 1933. The preparation of isotonic solutions for use in experiments with fish. Publ. Staz. Zool. Nap. 12, 425-431.

## Claims

1. **A process** of modulating nutritional supplementation in fish **characterized by** incorporating a bioactive compound into fish eggs assisted by low-frequency ultrasounds, wherein:
a) The selected bioactive compound is diluted in an adequate solution at an adequate concentration,
b) Adding a suitable concentration of selected fish-eggs to the compound solution of step (a),
c) Applying two pulses of ultrasounds to the mixture of step (b) at a frequency of 70kHz to 120KHz, preferably of 80kHz to 100KHz, amplitude of 100mV to 150mV during, during 100 to 150 seconds.

2. A process according to claim 1 **characterized by** the selected bioactive compound being arginine, glutamine, spermine, allicin (garlic) and curcumin (curcuma).

3. A process according to claim 1 or 2 **characterized by** the fish-eggs are from a seawater fish, the solution of step (a) is Ringer's solution and the ultrasounds are applied in two pulses each one with the duration of approx. 150 sec, with a frequency of approx. 80000 Hz, and amplitude of approx. 150 mV.

4. A process according to claim 3 **characterized by** the fish-eggs are from gilthead seabream (*Sparus aurata*) and the concentration of fish-eggs in the compound solution is of 5 egg mL⁻¹.

5. A process according to claim 1 or 2 **characterized by** the fish-eggs are from a freshwater fish, the solution of step (a) is teleost solution and the ultrasounds are applied in two pulses each one with the duration of approx. 100 sec, with a frequency of approx. 100000 Hz, and amplitude of approx. 100 mV.

6. A process according to claim 5 **characterized by** the fish-eggs are from zebrafish and the concentration of fish-eggs in the compound solution is of 5 egg mL⁻¹.

7. An ultrasound system for carrying out the process as described in claims 1 to 6 **characterized by** comprising a signal generator (1), a signal amplifier (2) and an ultrasound transducer (3), wherein said system is able to provide ultrasounds at a centre frequency of 70kHz to 120KHz, preferably of 80kHz to 100KHz.
